# EUROPEAN PATENT APPLICATION

(11) **EP 0 565 747 A1**
(43) Date of publication of application: **20.10.1993**
(21) Application number: 92106366.5
(22) Date of filing: 13.04.1992
(51) Int. Cl.: B62M 3/00

(54) **A transmission structure for a cycle**

(71) Applicant: FAR GREAT PLASTICS INDUSTRIAL CO., LTD., Tainan Hsien (TW)
(72) Inventor: Chen, Ting-Hsing, c/o Far Great Plas.Ind.Co.,Ltd., Tainan Hsien (TW)
(74) Representative: Casalonga, Axel

(57) **Abstract**

A transmission for a cycle has an axle body (1) being integral with a wheel hub of a tricycle having a transverse hole at bottom portion and a plurality of serrations (111) spaced formed therein, a pair of stands (2) at respective sides of the axle body, a pair of cranks (3,3') at respective outer sides of the stands each having a connecting rod 32 extending one end therefrom for insertion into and connecting with the axle hub by means of a bolt (4) and nut (5). Each connecting rod has a plurality of serrations spaced formed thereon in such a manner that when inserted into the transverse hole of the axle hub, the serrations of the connecting rods will engage with the serrations of the transverse hole of the axle.

## Description

### BACKGROUND OF THE INVENTION

### Field of the invention

This invention relates to a transmission structure for a cycle. More particular, a transmission structure adapted to be installed on a tricycle or a bicycle.

### Related Prior Art

Tricycles have long been devised for kids to ride at playground for fun. Bicycles have also been devised long time ago for people to ride for variety purposes.

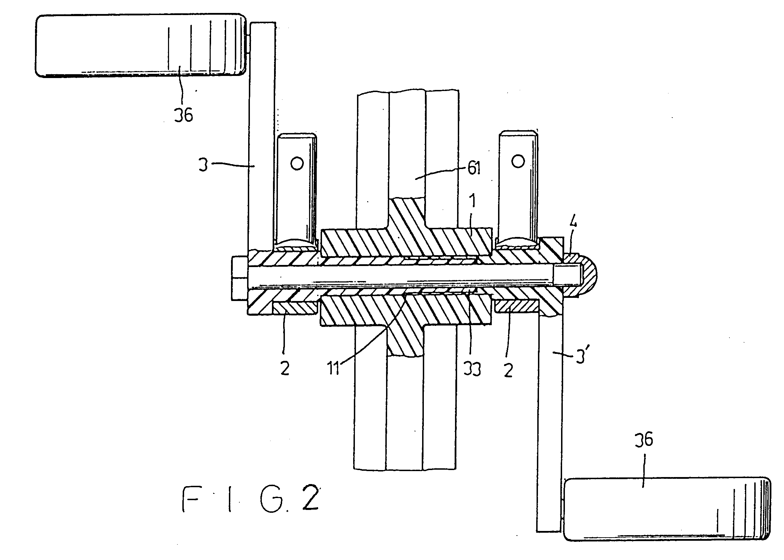

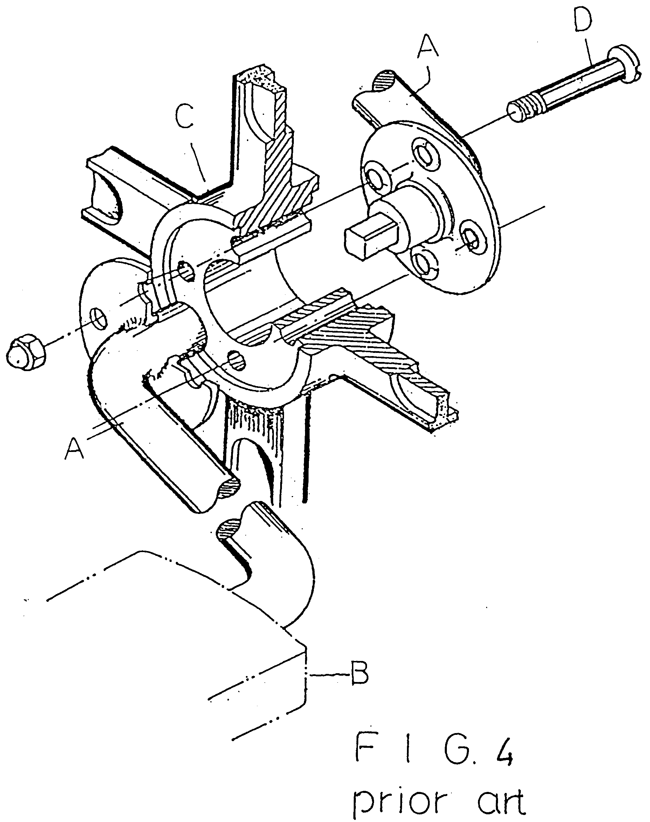

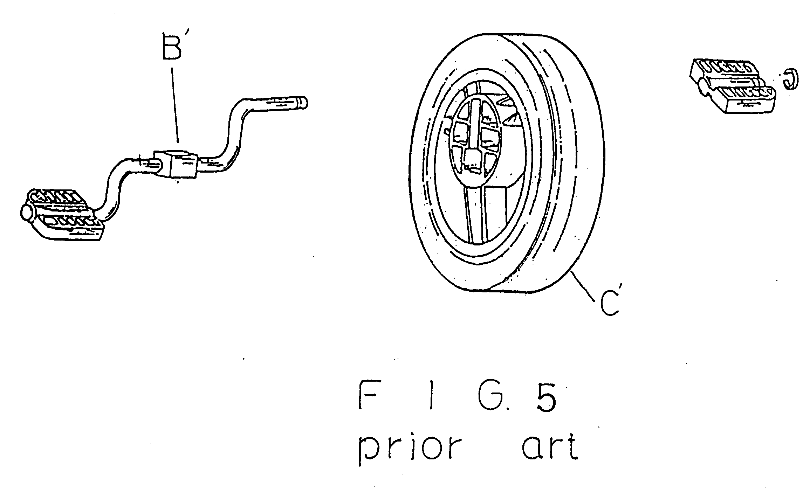

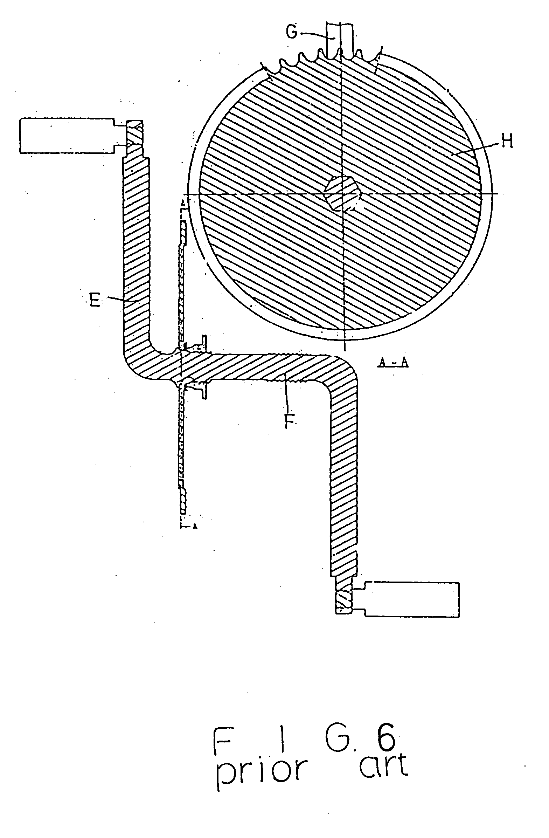

One embodiment of a tricycle of prior art, as shown in FIG. 4, comprises a pair of cranks A one of which has an aperture to receive a protruding portion of another crank A. The two cranks A are secured in a hub of a front wheel C of a tricycle by means of a plurality of bolts D. An integral crank B'is provided, as shown in FIG. 2, with its center portion being formed of a special shape which corresponds to the shape of an aperature of a front wheel C' in order to engage therewith. The above two prior arts may also be adapted on bicycles, as shown in FIGS. 5 and 6 by changing the hub to a gear H. The prior arts have simplified the procedure of manufacturing the products, but they require a lot of space in packing and in storage.

The inventor has therefore, invented this invention to correct the above disadvantages.

### SUMMARY OF THE INVENTION

It is the primary object to provide a transmission structure for a cycle which is easy to install.

It is another object of the present invention to provide a transmission structure which is inexpensive to manufacture.

It is a further object of the present invention to provide a transmission structure which lasts longer.

### BRIEF DESCRIPTION OF THE DRAWINGS

FIG. 1 is an exploded view of a first embodiment of the present invention;
FIG. 2 is a side view of FIG. 1 partially sectioned;

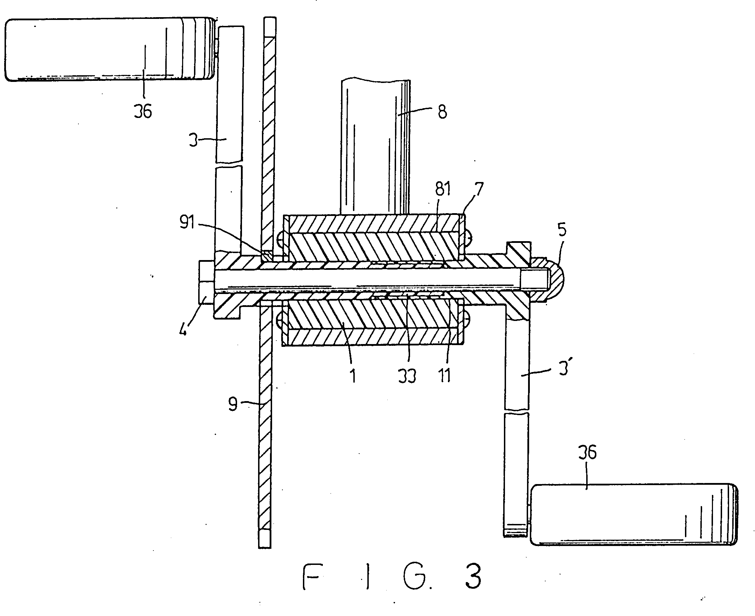

FIG. 3 is a front view of the present invention of a second embodiment;
FIG. 4 is a fragmentary view of a first embodiment of a prior art;
FIG. 5 is a fragmentary view of a second embodiment of a prior art;
FIG. 6 is a side view of a prior art of another embodiment; and
FIG. 7 is an exploded view of a prior art of a further embodiment;

### DETAILED DESCRIPTION

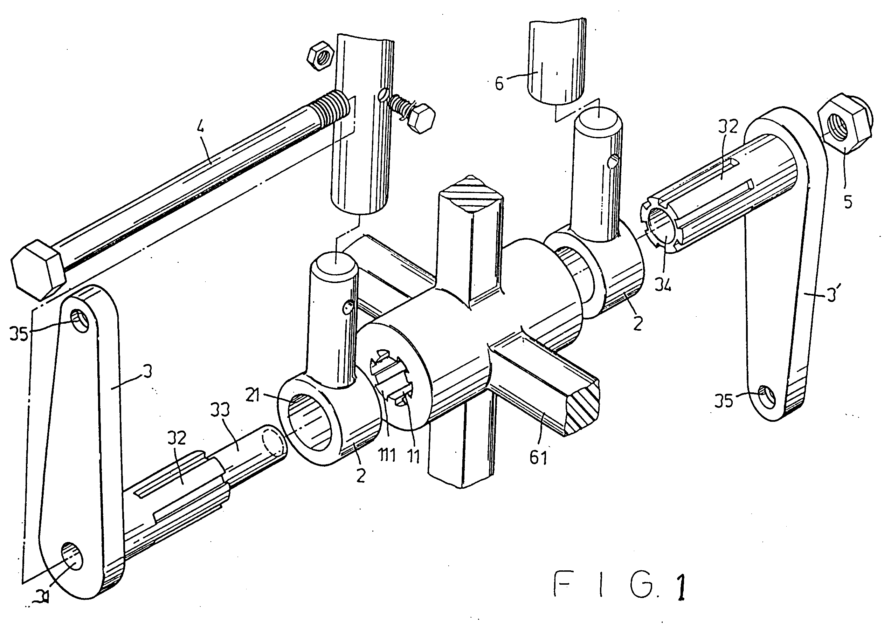

Referring to the drawings wherein the showings are for the purpose of illustrating preferred embodiments of the invention only and not for the purposes of limiting the same, FIG. 1 shows the present invnetion is composed essentially of an axle body 1 being integral to a front wheel hub of a tricycle and having a through hole 11 and a plurality of serrations 111 spaced formed therein, a Pair of identical stands 2 each having a post extending upwardly for insertion through the front fork of a tricycle, seating on an annular ring which has a transverse hole 21, and a pair of identical cranks 3, 3'. Each crank 3, 3' has a connecting rod 32 extending inwardly from one end thereof and having a passage therethrough. Each of the connecting rods 32 has further extending a reduced diameter portion 33 which is sized to be received within the aperture 34 of the rod 32 of another crank 3'. The other end of cranks 3 have also an aperture 35 to receive a pedal thereof. Each of the connecting rods 32 is formed with a plurality of serrations spaced located thereon. A bolt 4 is inserted into the aperture 31 from one side, through the connecting rod 32, the reduced diameter portion 33, the stand 2, and the axle hub 1 and secured at the other side by a nut 5 as shown in FIG. 4.

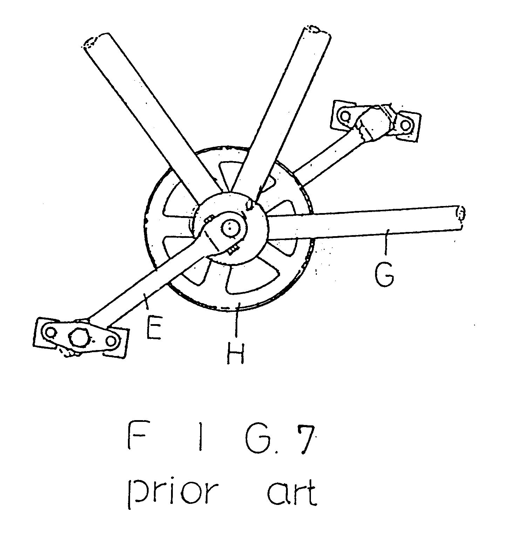

This structure may also be adapted to a bicycle, as shown in FIG. 7. The axle body 1 is secured in an perture 81 of a main body 8 of a bicycle. The respective ends of the aperture 81 are sealed with two covers 7. A crank 3 is then placed nextby. The unit is then, secured by a bolt 4 inserted through the passage and sealed by a nut 5. The two stands 2 are taken away for this installation that requires no further manufacture procedure.

## Claims

1. A transmission structure for a cycle comprising:
an axle body being integral with a wheel hub of a tricycle having a passage at center and being formed with a plurality of concave and convexes therein;
a pair of identical stands each having a transverse hole at bottom portion thereof and a post thereon;
a pair of L-shaped identical cranks each having a connecting rod extending therefrom and having formed with a plurality of serrations thereon for engagement with said concave and convexes; a reduced diameter portion being formed at one end of one of said connecting rods to be inserted into an aperature of another crank; said connecting rods, and said reduced diameter portion having a hole corresponding to one another.

2. A transmission for a cycle of claim 1, wherein said axle body is secured to a gear of a bicycle and wherein said cranks are fixedly engaged within said axle body of said bicycle.
